Europäisches Patentamt

European Patent Office

Office européen des brevets

(19)

(11) Numéro de publication: **0 195 694**
**B1**

(12) # FASCICULE DE BREVET EUROPEEN

(45) Date de publication du fascicule du brevet:
**19.04.89**

(51) Int. Cl.⁴: **B60R 22/34**

(21) Numéro de dépôt: **86400293.6**

(22) Date de dépôt: **11.02.86**

(54) **Enrouleur de ceinture de sécurité à corps cylindrique.**

(30) Priorité: **15.02.85 FR 8502231**

(43) Date de publication de la demande:
**24.09.86 Bulletin 86/39**

(45) Mention de la délivrance du brevet:
**19.04.89 Bulletin 89/16**

(84) Etats contractants désignés:
**DE GB IT SE**

(56) Documents cités:
**DE-A- 1 935 539**
**FR-A- 2 354 951**
**FR-A- 2 536 661**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Monsigny, Jean, 30 Rue du Zornhoff, F-67700 Saverne(FR)**

(74) Mandataire: **Moncheny, Michel et al, c/o Cabinet Lavoix 2 Place d'Estienne d'Orves, F-75441 Paris Cedex 09(FR)**

EP 0 195 694 B1

ACTORUM AG

**Description**

La présente invention est relative aux enrouleurs de ceintures de sécurité pour véhicules automobiles.

Les enrouleurs de ceintures de sécurité de ce type connus jusqu'à ce jour comprennent généralement une monture ou base en forme générale de U entre les branches de laquelle est montée à rotation une bobine porte-sangle.

De part et d'autre des branches de la monture et à l'extérieur de celle-ci sont montés:

a) un dispositif à ressort de rappel de sangle;

b) les systèmes de sécurité et de verrouillage.

Un enrouleur de ce type est décrit dans FR-A 2 536 661.

Une telle conception est mal adaptée à l'assemblage automatique en raison de l'existence de nombreuses pièces à assembler par les deux extrémités de l'enrouleur et du manque de soutien de l'arbre de bobine au cours de ces opérations.

De plus, les volumes différents du dispositif de rappel de sangle et des systèmes de sécurité et de verrouillage imposent de fabriquer des enrouleurs différents pour le montage à droite ou à gauche du véhicule.

On connaît par ailleurs d'après le DE-A 1 935 539, un dispositif pour ceinture de sécurité comprenant une base dans laquelle est montée à rotation une bobine porte-sangle, un dispositif à ressort de rappel de la sangle et des moyens de sécurité et de verrouillage de la sangle en réponse à un effort de traction brusque exercé sur celle-ci, dans lequel ladite base a une forme tubulaire, la bobine étant montée à rotation à l'intérieur de ladite base et tourillonnant par rapport à des flasques d'extrémité montés sur la base.

L'enrouleur du type précité présente lui aussi l'inconvénient de ne pas se prêter aisément à un assemblage automatique.

L'invention vise à remédier aux inconvénients précités des enrouleurs classiques et à créer un enrouleur de ceinture de sécurité qui, tout en étant d'un fonctionnement sûr et d'une construction simple, se prête particulièrement bien à un assemblage automatique.

Elle a donc pour objet un enrouleur de ceinture de sécurité comprenant une base dans laquelle est montée à rotation une bobine porte-sangle, un dispositif à ressort de rappel de la sangle et des moyens de sécurité et de verrouillage de la sangle en réponse à un effort de traction brusque exercé sur celle-ci, dans lequel ladite base a une forme tubulaire, la bobine étant montée à rotation à l'intérieur de ladite base et tourillonnant par rapport à des flasques d'extrémité montés sur la base, caractérisé en ce que la bobine est montée à rotation dans la base, à l'une au moins de ses extrémités, par l'intermédiaire d'organes de roulement, en contact avec la surface interne de la base, et en ce que le dispositif à ressort rappel de la sangle et lesdits moyens de sécurité de verrouillage sont respectivement contenus dans des compartiments délimités par les extrémités correspondantes de la base et des flasques d'extrémité.

L'invention sera mieux comprise à l'aide de la description qui va suivre, donnée uniquement à titre d'exemple et faite en se référant aux dessins annexés, sur lesquels:

– la Fig. 1 est une vue en élévation, avec arrachements partiels d'un enrouleur de ceinture de sécurité suivant l'invention;

– la Fig. 2 est une coupe suivant la ligne 2–2 de la Fig. 1;

– la Fig. 3 est une vue extérieure en élévation à plus petite échelle de l'enrouleur suivant l'invention montrant des moyens de fixation de l'enrouleur au véhicule;

– la Fig. 4 est une vue en coupe partielle suivant la ligne 4–4 de la Fig. 1 montrant la fixation du ressort de rappel de la sangle;

– les Fig. 5a et 5b sont des vues partielles de détails illustrant le mode de fixation de flasques sur la base de l'enrouleur.

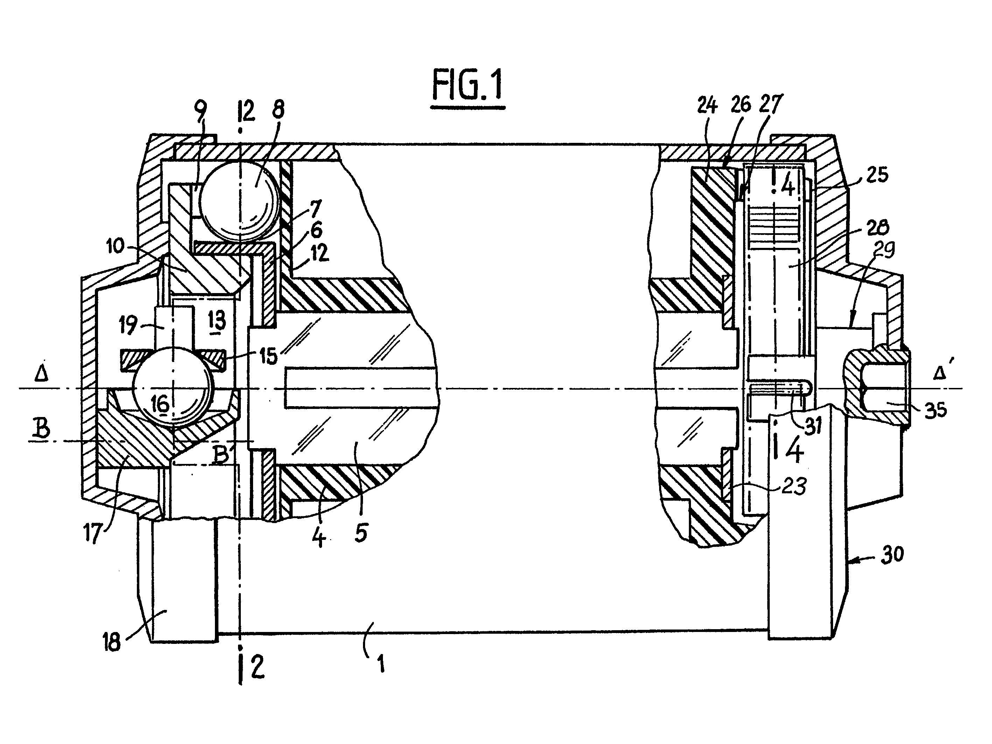

L'enrouleur pour ceinture de sécurité représenté à la Fig. 1 comporte un corps cylindrique tubulaire 1.

Dans la surface latérale du corps 1 est ménagée une ouverture 2 pour le passage de la sangle.

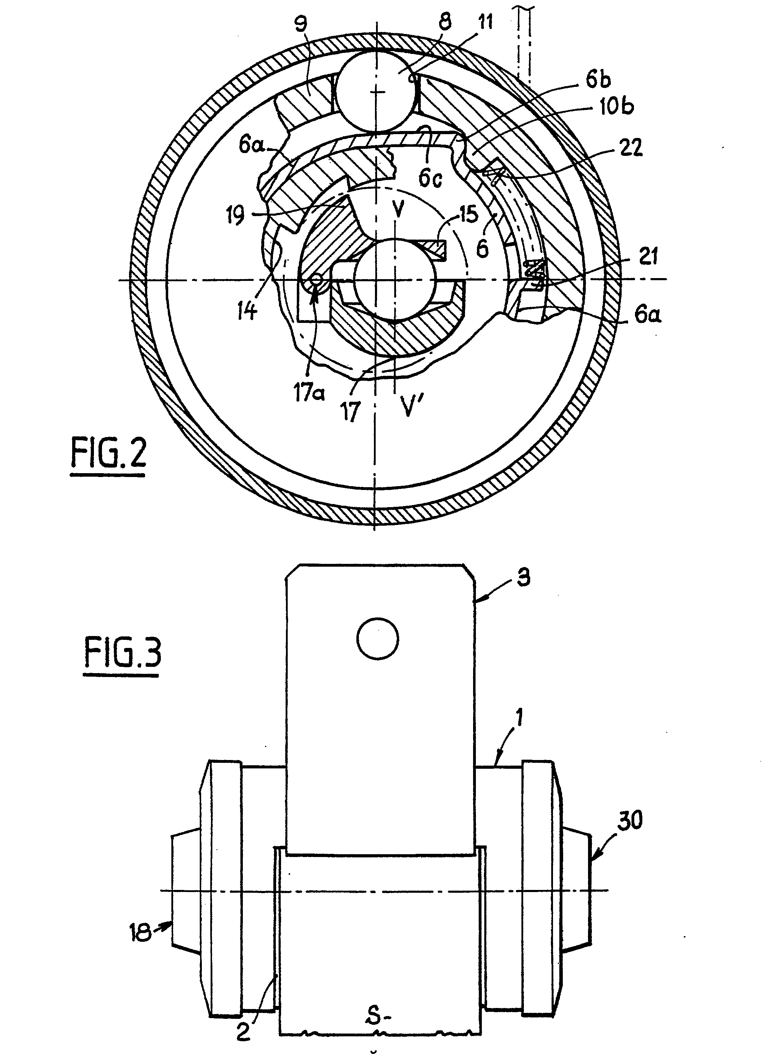

L'ouverture 2 est obtenue en découpant et en déroulant la matière du corps 1 qui la recouvre initialement et en formant simultanément une patte 3 de fixation du corps (Fig. 3).

Dans le corps cylindrique 1 est montée à rotation une bobine porte-sangle 4 en matière plastique par exemple, pourvue d'un insert raidisseur métallique 5 surmoulé ou rapporté.

A l'une des extrémités de l'insert 5 est fixée par sertissage une came 6 constituée par un disque comportant un rebord latéral 7 définissant une surface de came. Entre le rebord latéral 7 formant came et la paroi interne du corps 1, sont interposés des billes ou des galets 8, avantageusement au nombre de trois répartis à 120°, maintenus à leur emplacement désigné par une cage 9 qui fait partie intégrante d'une pièce 10 dont on verra les autres fonctions par la suite.

La pièce 10 est de forme générale annulaire et elle est disposée de façon coaxiale par rapport au corps cylindrique ou base 1.

La cage 9 pour les billes 8 est définie par des encoches 11 ménagées dans la paroi latérale de la pièce 10 (Fig. 2) qui débouchent en regard de la joue d'extrémité correspondante 12 de la bobine 4.

La pièce 10 comporte une cavité axiale à la périphérie de laquelle est ménagée une denture à rochet 14 (Fig. 2).

La denture à rochet 14 coopère avec un levier oscillant 15 déplaçable par une bille centrale 16 disposée dans un siège en forme de cuvette 17 et articulée sur le siège 17 à l'aide d'un axe 17a.

Le siège 17 est fixé à un couvercle d'extrémité 18 qui coiffe l'extrémité correspondante du corps 1 et qui délimite ainsi dans ledit corps un compartiment pour les systèmes de sécurité et de verrouillage.

L'ensemble levier 15, bille 16 et cuvette 17 constitue un détecteur de décélération dont l'action est destinée à provoquer le blocage en rotation de la pièce 10 en cas de décélération brusque, par déplacement de la bille 16 sur les parois inclinées de la cuvette 17, provoquant ainsi le soulèvement du levier 15 et l'engagement d'un cliquet 19 de ce levier avec une dent du rochet 14.

La came 6 comporte des parties 6a centrées par rapport à l'axe Δ Δ' du corps 1. Ces parties 6a de la came 6 sont donc libres en rotation dans l'alésage du corps 1 grâce à la présence des billes 8.

On voit donc qu'à l'une de ses extrémités, la bobine 4 est montée au moyen de la came 6, à rotation directement dans le corps 1 de l'enrouleur.

La pièce 10 est centrée dans les parties cylindriques 6a de la came 6.

En outre, la came 6 comporte des becs saillants 6b, qui sont en contact avec des saillies rentrantes 10a de la pièce 10 de façon à assurer l'entraînement en rotation de cette pièce par la came 6.

De plus, la came 6 comporte autant de rampes 6c que l'agencement comporte de billes 8 ou autres éléments de roulement. Les rampes 6c sont disposées de l'autre côté des saillies rentrantes 10a de la pièce 10 par rapport aux becs 6b respectifs de la came 6.

Entre l'une des saillies rentrantes 10a de la pièce 10 et une patte 21 correspondante de la came 6 est disposé un ressort hélicoïdal 22 de rappel de la pièce 10 en position d'entraînement par la came 6.

On remarquera que le montage du ressort 22 dans un plan perpendiculaire à l'axe de montage de l'ensemble est facile s'il est présenté comprimé.

A l'extrémité de l'insert raidisseur 5 opposé à la came 6 est également fixée par sertissage une plaque d'entraînement 23 assurant la liaison de la bobine 4 avec l'insert raidisseur 5 (Fig. 2).

La joue 24 de la bobine 4 à laquelle est fixée la plaque d'entraînement 23 comporte un rebord axial 25 ayant une partie extérieure cylindrique 26 d'un diamètre tel qu'un léger jeu existe entre cette partie cylindrique et l'alésage du corps 1. La partie cylindrique 26 constitue une portée de tourillonnement de la bobine 4 dans le corps 1. On peut obtenir de bons résultats du point de vue du frottement en choisissant judicieusement le matériau de la bobine 4 pour assurer un bon contact métal-matière plastique entre la portée 26 et le corps 1.

Le rebord axial 25 de la bobine 4 définit un espace 27 dans lequel est disposé un ressort spiral 28 d'enroulement de sangle.

Ainsi, le rebord axial 25 de la bobine 4 constitue un barillet pour le ressort 28.

Le ressort 28 est fixé en son centre à une pièce 29 rendue solidaire d'un second flasque ou couvercle 30 qui ferme le corps 1 de l'enrouleur à son extrémité opposée au flasque 18.

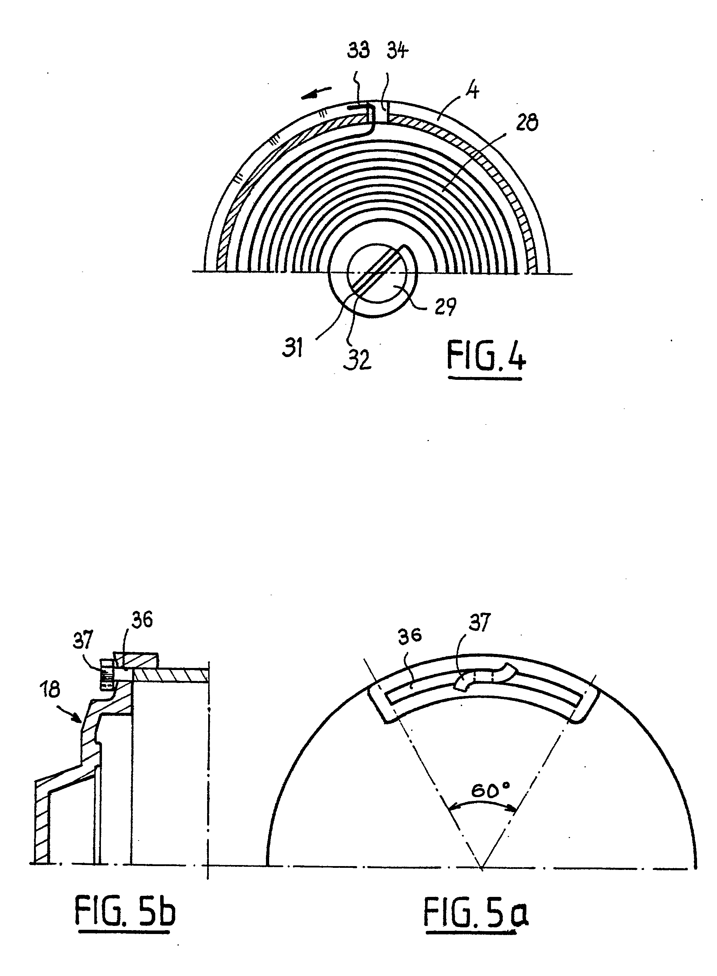

Le montage du ressort spiral 28 est représenté plus clairement à la Fig. 4 sur laquelle on voit que l'extrémité intérieure 31 du ressort 28 est engagé dans une fente 32 ménagée dans la pièce 29 tandis que son extrémité extérieure 33 est recourbée et accrochée à un bord d'une fente 34 pratiquée dans la périphérie de la bobine 4.

La tension du ressort 28 est assurée en faisant tourner la pièce 29 qui présente à cet effet un évidement 35 d'entraînement en rotation par exemple au moyen d'une clé.

Le blocage de la pièce 29 est assuré par un organe de blocage classique non représenté.

On voit donc que l'agencement qui vient d'être décrit est différent de celui des enrouleurs classiques dont le ressort spiral est accroché par l'extérieur à un point fixe et dont l'extrémité intérieure est solidaire de la bobine.

Le montage des flasques ou couvercles sur le corps de l'enrouleur va maintenant être décrit en référence aux Fig. 5a et 5b sur lesquelles on a représenté le couvercle 18 de fermeture du compartiment des moyens de détection et de verrouillage.

Le couvercle 18 comporte trois encoches périphériques 36 couvrant chacune 60° autour de l'axe de la bobine, lesdites encoches étant disposées à 120°.

Le corps 1 comporte trois pattes de fixation 37 en forme de T disposées elles aussi à 120°.

Le montage du couvercle 18 est assuré par engagement des pattes 37 dans les encoches 36.

Compte tenu de l'étendue angulaire des encoches 36, il est possible de régler la position angulaire du couvercle 18 par rapport au corps 1 de façon que l'axe vertical du détecteur de décélération brusque 15, 16, 17 fasse un angle approprié avec la fixation de l'enrouleur.

Cet angle étant établi on immobilise le couvercle 18 en position en faisant subir aux pattes 37 un pliage par torsion (Fig. 5a), de telle sorte que les parties repliées par la torsion coopérant avec des dépouilles du couvercle 18 bloquent solidement le couvercle sur le corps 1 tant en rotation qu'en translation.

Le mode de fixation du couvercle 30 situé à l'autre extrémité du corps 1 est réalisé par des moyens identiques.

Le fonctionnement de l'enrouleur qui vient d'être décrit est le suivant.

On supposera tout d'abord une situation dans laquelle la sangle S étant déroulée de la bobine et normalement fixée pour immobiliser un occupant d'un véhicule sur son siège, le véhicule subit une décélération brusque.

Cette décélération est immédiatement détectée par la bille 16 (Fig. 2) qui se déplace dans la cuvette 17 dont elle occupe normalement le centre.

Le déplacement de la bille 16 provoque de façon classique le soulèvement du levier 15 et l'engagement de son cliquet 19 avec une dent du rochet 14. Il en résulte l'immobilisation en rotation autour de l'axe Δ Δ' de la pièce 10 et des billes 8.

La bobine 4 continue d'être entraînée en rotation sous l'effet de la traction exercée par la sangle. Il en résulte un mouvement relatif entre la pièce 10 et la came 6 solidaire de la bobine 4, de sorte que les rampes 6c de la came tendent par effet de coin à écarter les billes 8 et à les appliquer contre la paroi interne du corps 1 ce qui assure le blocage en rotation de l'ensemble. Cette disposition et le choix porté sur des billes ou des galets comme éléments de roulement ont l'avantage de réduire le temps de réponse du système de sécurité par rapport aux dispositifs à galets et alvéoles classiques dont les galets doivent trouver par déplacement angulaire un alvéole destiné à les recevoir, ce qui nécessite une course angulaire avant blocage et se traduit par un léger déroulement de la sangle.

La sensibilité du système aux mouvements de la sangle est assurée par le ressort hélicoïdal 22 (Fig. 2).

Dans le cas d'une action vive exercée sur la sangle S (Fig. 3) et en raison des effets d'inertie, le déplacement relatif de la came 6 par rapport à la pièce 10 provoque la compression du ressort 22 en même temps que le coincement de sécurité entre la came 6 et le corps 1 sous l'action des billes.

Lorsque l'action sur la sangle cesse, le ressort 22 en se détendant ramène la pièce 10 et la came 6 dans leur position relative représentée à la Fig. 2.

L'enrouleur suivant l'invention est destiné à fonctionner de telle sorte que l'axe vertical V V' (Fig. 2) fixant la position de repos du dispositif détecteur à inertie ait une orientation particulière par rapport à la patte 3 de fixation de l'enrouleur à la caisse du véhicule.

Les mêmes enrouleurs étant montés sur divers véhicules et parfois différemment sur le même véhicule, leur personnalisation est caractérisée par l'angle défini ci-dessus.

A cet effet, le siège 17 du détecteur de décélération est rendu réglable en rotation autour de son axe B B' de fixation au couvercle 18. Il est donc possible de procéder au réglage de la position du détecteur après montage et d'assurer ainsi la personnalisation de l'enrouleur.

La nouvelle conception de l'enrouleur suivant l'invention permet de disposer la sangle S au milieu de l'enrouleur et d'équiper celui-ci de couvercles d'extrémités 18 et 20 semblables de telle sorte que la même pièce puisse se monter indifféremment à droite ou à gauche.

L'enrouleur suivant l'invention présente en outre l'avantage de faciliter le montage de la sangle.

En effet, dans les enrouleurs classiques, dans lesquels le ressort spiral de reprise de sangle est accroché par son extrémité intérieure sur l'arbre de la bobine, le ressort est armé à vide, la bobine étant remplie d'une fausse sangle, puis on extrait cette fausse sangle, on bloque l'arbre et on introduit la véritable sangle garnie de ses accessoires cousus de façon bien définie correspondant au type de véhicule auquel est destiné l'enrouleur.

Grâce à l'agencement de l'invention, dans lequel la tension du ressort 28 est assurée par action sur son extrémité centrale, on peut garnir la bobine 4 avant montage, d'une longueur suffisante de sangle pour tous les modèles et ajuster cette longueur en même temps que l'on personnalise la sangle par ses accessoires.

En raison de sa conception, l'enrouleur suivant l'invention se prête à un montage automatique.

En effet, tout l'assemblage de base peut être réalisé à l'aide de pièces semblables ce qui entraîne une diminution des stocks et rend inutile le travail par convois personnalisés.

On constitue un sous-ensemble formé par la bobine 4, et l'insert 5 sur lequel on a monté la came 6 et la pièce de liaison 23 ainsi que le ressort 28 dans la logement 27 de la bobine.

On enroule la sangle S non équipée sur la bobine 4 en s'arrangeant pour que la sangle passe par l'ouverture 2 du corps tubulaire 1.

On monte les billes 8, la pièce 10, le ressort de rappel 22 et on coiffe le tout du sous-ensemble formé par le couvercle 18 et le dispositif de détection 15, 16, 17.

On retourne l'ensemble, on met en place le couvercle 30 portant la pièce de réglage de tension 29, on arme le ressort 28 en tournant la pièce 29 d'un nombre de tours voulu.

L'enrouleur de base est alors terminé et peut être personnalisé, c'est-à-dire adapté au type de véhicule auquel il est destiné, lors de la préparation des commandes à livrer.

Ainsi qu'on peut le voir, notamment d'après les dessins et en particulier d'après la Fig. 3, l'enrouleur suivant l'invention présente une symétrie par rapport au milieu de la patte de fixation 3.

## Revendications

1. Enrouleur de ceinture de sécurité comprenant une base (1) dans laquelle est montée à rotation une bobine porte-sangle (4), un dispositif à ressort de rappel (28) de la sangle (S) et des moyens de sécurité et de verrouillage de la sangle (S) en réponse à un effort de traction brusque exercé sur celle-ci, dans lequel ladite base (1) a une forme tubulaire, la bobine (4) étant montée à rotation à l'intérieur de ladite base et tourillonnant par rapport à des flasques d'extrémité (18, 30) montés sur la base, caractérisé en ce que la bobine (4) est montée à rotation dans la base (1), à l'une au moins de ses extrémités, par l'intermédiaire d'organes de roulement (8), en contact avec la surface interne de la base (11), et en ce que le dispositif à ressort rappel (28) de la sangle et lesdits moyens de sécurité de verrouillage (10, 15, 16, 17) sont respectivement contenus dans des compartiments délimités par les extrémités correspondantes de la base (1) et des flasques d'extrémité (18, 30).

2. Enrouleur suivant la revendication 1, dont la bobine (4) en matière plastique comporte un insert raidisseur (5) métallique surmoulé ou rapporté, caractérisé en ce qu'à une extrémité dudit insert est fixée une came (6) pourvue d'un rebord latéral (7) définissant une surface de came, ladite came ayant des portions circulaires centrées sur l'axe (Δ, Δ') de l'enrouleur, des éléments de roulement (8) étant interposés entre lesdites portions circulaires (6a) et la paroi interne de la base (1), lesdits organes de roulement assurant le montage à rotation de l'extrémité correspondante de la bobine (4) dans la base (1) de l'enrouleur.

3. Enrouleur suivant la revendication 2, caractérisé en ce que chaque portion circulaire (6a) de la came (6) est prolongè par une rampe (6c) de blocage par coincement des organes de roulement (8) par rapport à la surface interne de la base (1).

4. Enrouleur suivant l'une des revendications 1 à 3, caractérisé en ce que les organes de roulement (8) sont maintenus par une cage (9) qui fait partie d'une pièce (10) concentrique à la base (1) et pourvue d'une denture à rochet (14) destinée à coopérer avec le cliquet (19) d'un détecteur de décélération (15, 16, 17) solidaire d'une partie fixe de l'enrouleur.

5. Enrouleur suivant la revendication 4, caractérisé en ce que ledit détecteur de décélération (15, 16, 17) comporte un siège (17) en forme de cuvette fixé à l'un des flasques d'extrémité (18) de façon orientable en fonction de la position de montage de l'enrouleur dans un véhicule, une bille (16) étant disposée dans ladite cuvette et coopérant avec un levier oscillant (15) qui porte ledit cliquet (19).

6. Enrouleur suivant l'une des revendications 2 à 5, caractérisé en ce que ladit came (6) comporte des becs (6b) coopérant avec des saillies rentrantes (10b) de la pièce (10) portant la cage (9), un ressort de rappel (22) étant interposé entre l'une desdites saillies rentrantes de la pièce (10) et une languette (21) de ladite came (6).

7. Enrouleur suivant l'une quelconque des revendications 2 à 6, caractérisé en ce qu'à son extrémité opposée à la came (6), la bobine (4) comporte une surface périphérique cylindrique (26) par laquelle elle est montée à rotation dans la base (1), ladite surface cylindrique (26) étant prolongée par un rebord (25) définissant un barillet dans lequel est disposé le ressort (28) de rappel de sangle.

8. Enrouleur suivant la revendication 7, caractérisé en ce que le ressort (28) de rappel de sangle est fixé par son extrémité interne (31) à une pièce (29) de réglage de tension rendue solidaire d'un second flasque (30) formant la base (1) à son extrémité opposée aux moyens de sécurité et de verrouillage, et par son extrémité extérieure (33) à la périphérie de la bobine (4).

9. Enrouleur suivant l'une quelconque des revendications 1 à 8, caractérisé en ce que la base (1) est pourvue d'une patte de fixation (3) venue de matière, obtenue par découpage d'une partie de la surface latérale de la base et déroulage de la matière de la partie découpée.

10. Enrouleur suivant la revendication 9, caractérisé en ce que la découpe ménagée dans la surface latérale de la base (1) forme un passage pour la sangle (S).

11. Enrouleur suivant l'une quelconque des revendications 1 à 10, caractérisé en ce qu'au moins le flasque (18) de fermeture de la base du côté du dispositif de sécurité et de verrouillage comporte des lumières en forme de portions de circonférence permettant le réglage de la position angulaire du flasque (18) et par conséquent du détecteur de décélération (15, 16, 17) fixé à celui-ci, des ergots de fixation (37) solidaires de l'extrémité de la base (1) étant engagés dans lesdites lumières (36) pour immobiliser le flasque (18) en translation et en rotation par rapport audit corps.

12. Enrouleur suivant l'une quelconque des revendications 9 à 11, caractérisé en ce que les flasques d'extrémité (18, 30) fermant la base (1) sont semblables de sorte que l'enrouleur présente une symétrie par rapport au milieu de sa patte de fixation (3).

## Claims

1. Safety belt reeling means comprising a base (1) in which is rotatably mounted a strap-carrying reel (4), spring means (28) for returning the strap(s) and safety and locking means for the strap(s) responsive to a sudden pulling force exerted on the strap, in which the base (1) has a tubular shape and the reel (4) is rotatably mounted inside the base and journalled relative to the end walls (18, 30) mounted on the base, characterised in that the reel (4) is rotatably mounted in the base (1), at at least one of its ends, by rolling elements (8) in contact with the inner surface of the base (11), and in that the spring return means (28) for the strap and the safety and locking means (10, 15, 16, 17) are respectively contained in compartments defined by the corresponding ends of the base (1) and the end walls (18, 30).

2. Reeling means according to claim 1, in which the reel (4) is of plastics material and includes a metal stiffening insert (5) which is moulded onto or mounted on the reel, characterised in that at one end of the insert is fixed a cam (6) provided with a lateral flange (7) defining a cam surface, the cam having circular portions centered on the axis (Δ, Δ') of the reeling means, the rolling elements (8) being interposed between said circular portions (6a) and the inner wall of the base (1), the rolling elements providing the rotatable mounting of the corresponding end of the reel (4) in the base (1) of the reeling means.

3. Reeling means according to claim 2, characterised in that each circular portion (6a) of the cam (6) is extended by a locking ramp (6c) operative by jamming the rolling elements (8) relative to the inner surface of the base (1).

4. Reeling means according to any one of claims 1 to 3, characterised in that the rolling elements (8) are held in position by a cage (9) which is part of an element (10) which is concentric with the base (1) and provided with ratchet teeth (14) adapted to cooperate with a pawl (19) of a deceleration detector (15, 16, 17) integral with a fixed part of the winder.

5. Reeling means according to claim 4, characterised in that the deceleration detector (15, 16, 17) comprises a seat (17) in the shape of a cup fixed to one of the end walls (18) in such manner as to be orientable as a function of the mounting position of the reeling means in a vehicle, a ball (16) being disposed in the cup and cooperating with a pivotal lever (15) which carries the pawl (19).

6. Reeling means according to any one of claims 2 to 5, characterised in that the cam (6) has nose portions (6b) cooperative with inwardly extending projections (10b) on the element (10) carrying the cage (9), a return spring (22) being interposed between one of the inwardly extending projections of the element (10) and a tab (21) of the cam (6).

7. Reeling means according to any one of claims 2 to 6, characterised in that the reel (4) has, at the end thereof opposite the cam (6), a cylindrical peripheral surface (26) by which it is rotatably mounted in the base (1), the cylindrical surface (26) being extended by a flange (25) defining a barrel in which the strap return spring (28) is disposed.

8. Reeling means according to claim 7, characterised in that the strap return spring (28) is secured, by its inner end (31), to a member (29) for adjusting tension connected to a second end wall (30) constituting the base (1) at the end thereof opposed to the safety and locking means and, by its outer end (33), to the periphery of the reel (4).

9. Reeling means according to any one of claims 1 to 8, characterised in that the base (1) is provided with a fixing foot (3) which is an integral part of the base and obtained by cutting out a portion of the lateral surface of the base and bending the material of the cut-out portion.

10. Reeling means according to claim 9, characterised in that the cut-out portion in the lateral surface of the base (1) forms a passage for the strap(s).

11. Reeling means according to any one of claims 1 to 10, characterised in that at least the end wall (18) for closing the base adjacent to the safety and locking means comprises openings in the form of portions of the circumference permitting the adjustment of the angular position of the end wall (18) and consequently of the deceleration detector (15, 16, 17) mounted on said end wall, fixing lugs (37) connected to the end of the base (1) engaging in said openings (36) for immobilizing the side wall (18) in translation and in rotation with respect to said body.

12. Reeling means according to any one of claims 9 to 11, characterised in that the end walls (18, 30) closing the base (1) are similar so that the reeling means has a symmetry relative to the middle of its fixing foot (3).

## Patentansprüche

1. Sicherheitsgurtroller mit einem Trägerkörper (1), in dem drehbar eine Gurtträgerwalze (4), eine Federvorrichtung (28) zum Rückholen des Gurtes (S) und Sicherheitsorgane zum Verriegeln des Gurtes (S) beim Auftreten einer schlagartigen Zugbelastung des Gurtes angebracht ist, wobei der Trägerkörper (1) eine rohrförmige Form aufweist, die Walze (4) drehbar im Inneren des Trägerkörpers und frei beweglich bezüglich der Endflansche (18, 20), die auf dem Trägerkörper befestigt sind, gelagert ist, dadurch gekennzeichnet, daß die Walze (4) mit mindestens einer ihrer Enden über Rollen (8) drehbar in dem Trägerkörper (1) in Kontakt mit der Innenfläche (11) des Trägerkörpers gelagert ist und dadurch, daß die Federvorrichtung (28) zum Rückholen des Gurtes und die Sicherheits- und Verriegelungsorgane (10, 15, 16, 17) jeweils in abgetrennten Kammern enthalten sind, die durch die entsprechenden Enden des Trägerkörpers (1) und der Endflansche (18, 30) begrenzt sind.

2. Sicherheitsgurtroller nach Anspruch 1, wobei die Walze (4) aus Kunststoff einen Versteifungseinsatz (5) aus Metall aufweist, der eingegossen oder eingesteckt ist, dadurch gekennzeichnet, daß an einem Ende dieses Einsatzes eine Nockenscheibe (6) mit einem seitlichen Rand (7) befestigt ist, der eine Nockenfläche bildet, wobei die Nockenscheibe kreisförmige, bezüglich der Achse (Δ, Δ') des Rollers zentrierte Bereiche aufweist und wobei die Rollen (8) zwischen die kreisförmigen Bereiche (6a) und die Innenfläche des Trägerkörpers (1) angeordnet sind, wobei die Rollen die drehbare Lagerung des entsprechenden Endes der Walze (4) in dem Trägerkörper (1) des Rollers gewährleisten.

3. Sicherheitsgurtroller nach Anspruch 2, dadurch gekennzeichnet, daß jeder kreisförmige Bereich (6a) der Nockenscheibe (6) durch eine Rampe (6c) verlängert wird, zur Klemmblockierung der Rollen (8) bezüglich der Innenseite des Trägerkörpers (1).

4. Sicherheitsgurtroller nach einem der Ansprüche 1–3, dadurch gekennzeichnet, daß die Rollen (8) in einem Käfig (9) gehaltert sind, der einen Teil eines konzentrisch zum Trägerkörper (1) angeordneten Stücks (10) darstellt und mit Sägezähnen (14) versehen ist, die dazu bestimmt sind, mit einer Sperrklinke (19) eines Verzögerungsdetektors (15, 16, 17) zusammenzuwirken, der mit einem festen Teil des Rollers verbunden ist.

5. Sicherheitsgurtroller nach Anspruch 4, dadurch gekennzeichnet, daß der Verzögerungsdetektor (15, 16, 17) einen Sitz in Form einer an einem der Endflansche (18) befestigten Cuvette aufweist, die je nach der Montageposition des Rollers in einem Fahrzeug orientierbar ist, wobei eine Kugel (16) in dieser Cuvette angeordnet ist und mit einem oszillierenden Hebel (15) zusammenwirkt, der die Sperrklinke (19) trägt.

6. Sicherheitsgurtroller nach einem der Ansprüche 2–5, dadurch gekennzeichnet, daß die Nockenscheibe (6) Spitzen (6b) aufweist, die mit nach innen gerichteten Vorsprüngen (10b) des Stücks (10) zusammenwirkt, das den Käfig (9) trägt, wobei eine Rückholfeder (22) zwischen einem der nach innen gerichteten Vorsprünge des Stücks (10) und einer Zunge (21) der Nockenscheibe (6) angeordnet ist.

7. Sicherheitsgurtroller nach einem der Ansprüche 2–6, dadurch gekennzeichnet, daß die Walze (4) an ihrem der Nockenscheibe (6) gegenüberliegenden Ende eine zylinderförmige Randfläche (26) aufweist, mittels der sie in dem Trägerkörper (1) drehbar gelagert ist, wobei die zylinderförmige Fläche (26) durch einen Rand (25) verlängert wird, der ein Federgehäuse bildet, in dem Federn (28) zum Rückholen des Gurtes angeordnet sind.

8. Sicherheitsgurtroller nach Anspruch 7, dadurch gekennzeichnet, daß die Feder (28) zum Rückholen des Gurtes an seinem inneren Ende (31) an einem Teil (29) zum Einstellen der Spannung befestigt ist, das mit einem zweiten Flansch (30) verbunden ist, der den Trägerkörper (1) an seinem dem Sicherheits- und Verriegelungsorgan gegenüberliegenden Ende bildet und wobei der Gurt mit seinem äußeren Ende (33) an dem Rand der Walze (4) befestigt ist.

9. Sicherheitsgurtroller nach einem der Ansprüche 1–8, dadurch gekennzeichnet, daß der Trägerkörper (1) mit einer Befestigungslasche (3) versehen ist, die aus dem Material des Trägerkörpers hergestellt ist und erhalten wird durch Ausschneiden eines Teils der Seitenfläche des Trägerkörpers und abschließendem Abrollen des ausgeschnittenen Teils.

10. Sicherheitsgurtroller nach Anspruch 9, dadurch gekennzeichnet, daß der Ausschnitt aus der Seitenfläche des Trägerkörpers (1) eine Passage für den Gurt (S) bildet.

11. Sicherheitsgurtroller nach einem der Ansprüche 1–10, dadurch gekennzeichnet, daß mindestens der Flansch (18) zum Verschließen des Grundkörpers auf der Seite der Sicherheits- und Verriegelungsvorrichtung Öffnungen aufweist in Form von Umfangsbereichen, die das Einstellen der Winkellage des Flansches (18) und somit des Verzögerungsdetektors (15, 16, 17), der an diesem befestigt ist, gewährleisten, wobei Befestigungsvorsprünge (37), die mit den Enden des Trägerkörpers (1) verbunden sind, in diese Öffnungen (36) eingreifen, um die Flansche (18) bezüglich Translations- und Rotationsbewegungen gegenüber dem Trägerkörper zu fixieren.

12. Sicherheitsgurtroller nach einem der Ansprüche 9–11, dadurch gekennzeichnet, daß die Endflansche (18, 30), die den Trägerkörper (1) abschließt, sich gleichen, derart, daß der Roller bezüglich der Mitte seiner Befestigungslasche (3) symmetrisch ist.

# FIG.1

EP 0 195 694 B1

FIG.2

FIG.3

33  34

4

28

29

31  32

FIG. 4

37  36

18

FIG. 5b

36  37

60°

FIG. 5a